(19) Europäisches Patentamt
European Patent Office
Office européen des brevets

(11) EP 4 693 569 A1

(12) **EUROPEAN PATENT APPLICATION**
published in accordance with Art. 153(4) EPC

(43) Date of publication:
**11.02.2026 Bulletin 2026/07**

(21) Application number: **24781194.6**

(22) Date of filing: **26.03.2024**

(51) International Patent Classification (IPC):
***H01M 10/0569*** *(2010.01)* ***H01M 10/0568*** *(2010.01)*
***H01M 10/052*** *(2010.01)* ***H01M 10/058*** *(2010.01)*
***H01M 10/42*** *(2006.01)*

(52) Cooperative Patent Classification (CPC):
**H01M 10/052; H01M 10/0568; H01M 10/0569; H01M 10/058; H01M 10/42;** Y02E 60/10

(86) International application number:
**PCT/KR2024/003790**

(87) International publication number:
**WO 2024/205203 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039409**
**03.07.2023 KR 20230085973**

(71) Applicant: **SAMSUNG SDI CO., LTD.**
**Yongin-si, Gyeonggi-do 17084 (KR)**

(72) Inventors:
- **PARK, Jong Seok**
  **Yongin-Si Gyeonggi-do 17084 (KR)**
- **KIM, Soo Jin**
  **Yongin-Si Gyeonggi-do 17084 (KR)**
- **MOON, Jong Seok**
  **Yongin-Si Gyeonggi-do 17084 (KR)**
- **LEE, Kang Hee**
  **Yongin-Si Gyeonggi-do 17084 (KR)**
- **BAE, Woo Jin**
  **Yongin-Si Gyeonggi-do 17084 (KR)**
- **KIM, Hee Min**
  **Yongin-Si Gyeonggi-do 17084 (KR)**
- **WOO, Hyun Sik**
  **Yongin-Si Gyeonggi-do 17084 (KR)**
- **PARK, Jin Hwan**
  **Yongin-Si Gyeonggi-do 17084 (KR)**

(74) Representative: **Michalski Hüttermann & Partner Patentanwälte mbB**
**Kaistraße 16A**
**40221 Düsseldorf (DE)**

# (54) ELECTROLYTE AND LITHIUM BATTERY COMPRISING SAME

(57) Provided are an electrolyte and a lithium secondary battery including the same, the electrolyte including: a first lithium salt including a lithium ion and a first anion; a second lithium salt including a lithium ion and a second anion; and a solvent including a fluorine-containing linear ester, wherein a dissociation degree of the first lithium salt with respect to the fluorine-containing linear ester is greater than a dissociation degree of the second lithium salt with respect to the fluorine-containing linear ester.

FIG. 1

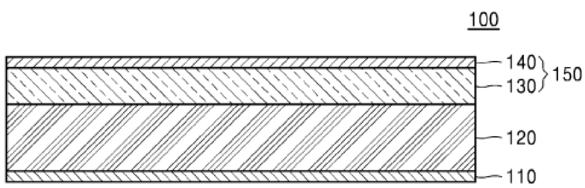


EP 4 693 569 A1

## Description

### Technical Field

The present disclosure relates to an electrolyte and a lithium battery including the same.

### Background Art

Lithium batteries are high-performance batteries with the highest energy density among currently commercialized batteries, and may be used in various fields such as electric vehicles.
As the anode of a lithium battery, a lithium metal thin film may be used. Such a lithium metal thin film is generally manufactured by rolling lithium into a plate form. However, in lithium secondary batteries having such a lithium metal thin film as an anode, dendrites are formed and grow on the lithium metal thin film, and as a result, the energy density and long-life characteristics of the lithium metal battery do not reach a satisfactory level, leaving much room for improvement.

### Disclosure

### Technical Problem

An aspect is to provide an electrolyte that reduces the internal resistance of lithium batteries and improves life characteristics.
Another aspect is to provide a lithium battery including the above-described electrolyte.

### Technical Solution

According to an aspect,
an electrolyte is provided, including:

a first lithium salt including a lithium ion and a first anion;
a second lithium salt including a lithium ion and a second anion; and
a solvent including a fluorine-containing linear ester,
wherein a dissociation degree of the first lithium salt with respect to the fluorine-containing linear ester is greater than a dissociation degree of the second lithium salt with respect to the fluorine-containing linear ester.

According to another aspect,
a lithium battery is provided, including:

a cathode;
an anode; and
the electrolyte disposed between the cathode and the anode.

### Advantageous Effects

According to an embodiment, the electrolyte includes a specific solvent, and thus exhibits excellent lithium ion conductivity, whereby the internal resistance of the lithium battery including the electrolyte may be reduced.
In addition, the electrolyte simultaneously includes a first lithium salt and a second lithium salt to form a protective layer that prevents lithium dendrite formation on the anode, so that the life characteristics of a lithium battery including the electrolyte may be improved.

### Description of Drawings

FIG. 1 schematically illustrates the structure of a lithium battery according to an embodiment.
FIG. 2 schematically illustrates the structure of a lithium battery according to an embodiment.
FIG. 3 is a schematic diagram of a lithium battery according to an embodiment.
FIG. 4 is a schematic diagram of a lithium battery according to an embodiment.
FIG. 5 is a schematic diagram of a lithium battery according to an embodiment.

Mode for Invention

Hereinafter, an electrolyte according to an embodiment and a lithium battery including the same will be examined in more detail. These examples are provided merely as examples to more specifically explain the present disclosure, and it will be apparent to those skilled in the art that the scope of the present disclosure is not limited by these examples.

Unless defined otherwise, all technical and scientific terms used herein have the same meaning as commonly understood by those skilled in the art to which this disclosure belongs. In the event of a conflict, the definitions provided in this specification shall prevail.

Although methods and materials similar or equivalent to those described herein may be used in the practice or testing of the present disclosure, suitable methods and materials are described herein. Singular expressions include plural expressions unless the context clearly indicates otherwise.

As used herein, the terms such as "comprise" or "have" are intended to indicate the presence of stated features, numbers, processes, actions, components, parts, ingredients, materials, or combinations thereof, but are not intended to preclude the presence or addition of one or more other features, numbers, processes, actions, components, parts, ingredients, materials, or combinations thereof.

The term "combination thereof" as used herein refers to mixtures or combinations with one or more of the described components.

As used herein, the term "and/or" is intended to include any and all combinations of one or more of the related listed items. As used herein, the term "or" means "and/or." The expressions "at least one," "one type or more," or "one or more" preceding components in this specification do not mean that the entire list of components is to be supplemented, nor do they mean that the individually described components are to be supplemented.

In this specification, the term "anode-free battery" refers to: i) a battery in which there is no anode active material capable of lithium intercalation and deintercalation, or ii) a battery in which an anode active material layer is not used during battery assembly. Here, the "thickness of the anode" refers to the total thickness of the anode current collector and the anode active material layer.

In the drawings, the thicknesses of various layers and regions are enlarged or reduced to clearly represent them. Throughout the specification, similar parts are denoted by the same reference numerals. Throughout the specification, when a layer, film, region, plate, or the like is described as being "on" or "above" another part, it includes not only a case where it is directly on the other part but also a case where another part exists in between. Throughout the specification, the terms "first," "second," and the like may be used to describe various components, but the components should not be limited by these terms. These terms are only used to distinguish one component from another.

The electrolyte may include: a first lithium salt including a lithium ion and a first anion; a second lithium salt including a lithium ion and a second anion; and a solvent including a fluorine-containing linear ester, wherein the dissociation degree of the first lithium salt with respect to the fluorine-containing linear ester may be greater than the dissociation degree of the second lithium salt with respect to the fluorine-containing linear ester.

For example, the greater the absolute value of the interaction energy (|IE|) between the lithium ion and the anion included in the lithium salt, the lower the dissociation degree may be; and the smaller the absolute value of the interaction energy (|IE|) between the lithium ion and the anion, the higher the dissociation degree may be.

For example, when the absolute value of the interaction energy is large, the binding energy between the lithium ion and the anion is high, so a relatively large amount of energy is required to separate the lithium salt into lithium ions and anions, which may result in a decreased dissociation degree of lithium ions in the solvent. Conversely, the smaller the absolute value of the interaction energy, the lower the binding energy between the lithium ion and the anion, so that a relatively small amount of energy is required to dissociate the lithium salt into lithium ions and anions, thereby increasing the dissociation degree of lithium ions in the solvent.

For example, the absolute value of the interaction energy (|IE|) may be obtained using the DFT method of the Gaussian program, which is structurally optimized at the M062X/6-311+G** level.

For example, the present electrolyte includes a first lithium salt and a second lithium salt, and when the electrolyte is applied to a lithium battery, a protective layer may be formed between the electrolyte and the anode by the first lithium salt and the second lithium salt during charge and discharge, and the life characteristics of the lithium battery may be improved by the protective layer. However, the internal resistance of the lithium battery may increase due to the protective layer. In this case, by including a solvent including a fluorine-containing linear ester in the electrolyte, the conductivity of lithium ions in the electrolyte may be improved, and excellent lifetime characteristics may be readily achieved while reducing the internal resistance of the lithium battery.

In addition, since the electrolyte simultaneously includes a first lithium salt having a high dissociation degree with respect to a fluorine-containing linear ester and a second lithium salt having a low dissociation degree, the conductivity of lithium ions in the electrolyte may be improved by including the first lithium salt having a high dissociation degree, and a protective layer in the lithium battery may be formed more easily by including the second lithium salt having a low dissociation degree.

According to an embodiment, the fluorine-containing linear ester may be represented by Formula 1.

<Formula 1>

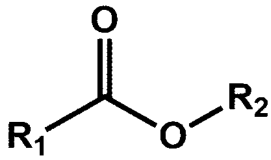

In Formula 1,
$R_1$ and $R_2$ are independently an alkyl group having 1 to 10 carbon atoms, unsubstituted or substituted with -F, -Cl, -Br or -I; an aryl group having 6 to 20 carbon atoms, unsubstituted or substituted with -F, -Cl, -Br or -I; or a heteroaryl group having 2 to 20 carbon atoms, unsubstituted or substituted with -F, -Cl, -Br or -I, provided that at least one of $R_1$ and $R_2$ may be substituted with one or more fluorine (F).

According to an embodiment, in Formula 1, $R_1$ may be substituted with one or more fluorine (F). According to another embodiment, in Formula 1, $R_2$ may be substituted with one or more fluorine (F). According to another embodiment, in Formula 1, both $R_1$ and $R_2$ may be substituted with one or more fluorine (F).

According to an embodiment, in Formula 1, $R_1$ may be substituted with one fluorine (F). According to another embodiment, in Formula 1, $R_2$ may be substituted with one fluorine (F). According to another embodiment, in Formula 1, both $R_1$ and $R_2$ may be substituted with one fluorine (F).

According to an embodiment, in Formula 1, $R_1$ and $R_2$ may be independently an alkyl group having 1 to 10 carbon atoms, which is unsubstituted or substituted with -F. According to an embodiment, in Formula 1, $R_2$ may be an alkyl group having 1 to 10 carbon atoms, which is unsubstituted or substituted with -F. According to an embodiment, in Formula 1, both $R_1$ and $R_2$ may be an alkyl group having 1 to 10 carbon atoms, which is unsubstituted or substituted with -F.

According to an embodiment, the fluorine-containing linear ester may be represented by Formula 1-1.

<Formula 1-1>

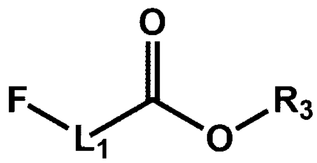

In Formula 1-1,
$L_1$ is an alkylene group having 1 to 10 carbon atoms, and $R_3$ is an alkyl group having 1 to 10 carbon atoms.

According to an embodiment, in Formula 1-1, $L_1$ may be a methylene group, an ethylene group, or a propylene group. According to an embodiment, in Formula 1-1, $R_3$ may be a methyl group, an ethyl group, a propyl group, a butyl group, or a pentyl group.

According to an embodiment, the content of the fluorine-containing linear ester may be 10 wt% or more based on the total weight of the solvent. For example, the content of the fluorine-containing linear ester may be 20 wt% or more, 30 wt% or more, or 40 wt% based on the total weight of the solvent. For example, the content of the fluorine-containing linear ester may be 10 wt% to 90 wt%, 20 wt% to 90 wt%, 30 wt% to 90 wt%, 40 wt% to 90 wt%, 10 wt% to 80 wt%, 10 wt% to 70 wt% or 40 wt% to 70 wt% based on the total weight of the solvent.

According to an embodiment, the fluorine-containing linear ester may satisfy Conditions 1 and 2.

<Condition 1>

$$| E_{Li\text{-}s} | > 1.8 \text{ eV}$$

In Condition 1,
$|E_{Li\text{-}s}|$ is the absolute value of the interaction energy between the fluorine-containing linear ester and lithium ion, measured using the DFT method of the Gaussian program with structure optimization at the M062X/6-311+G** level,

<Condition 2>

$$|E_{PF6\text{-}s}| < 0.1\ eV$$

$|E_{PF6\text{-}s}|$ is the absolute value of the interaction energy between the fluorine-containing linear ester and $PF_6^-$, measured using the DFT method of the Gaussian program with structure optimization at the M062X/6-311+G** level.

For example, the fluorine-containing linear ester may have a large interaction energy with lithium ions and a small interaction energy with anions (e.g., $PF_6$). For example, when the fluorine-containing linear ester has excellent interaction with lithium ions but relatively poor interaction with anions, the lithium ion conductivity of an electrolyte containing the fluorine-containing linear ester may be excellent.

According to an embodiment, in Condition 1, the absolute value of the interaction energy between the fluorine-containing linear ester and the lithium ion may be greater than 1.82 eV, greater than 1.84 eV, or greater than 1.86 eV.

According to an embodiment, in Condition 2, the absolute value of the interaction energy between the fluorine-containing linear $PF_6^-$ may be less than 0.1 eV, less than 0.08 eV, less than 0.06 eV, or less than 0.04 eV.

According to an embodiment, the solvent may further include an asymmetric cyclic carbonate.

According to an embodiment, the asymmetric cyclic carbonate may be represented by Formula 2.

<Formula 2>

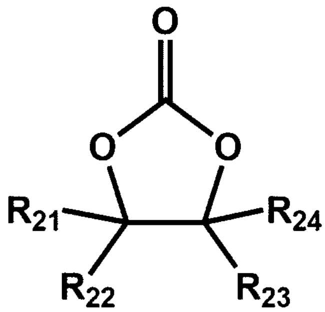

In Formula 2,

$R_{21}$ to $R_{24}$ are each independently hydrogen, deuterium (-D), -F, -Cl, -Br or -I; an alkyl group having 1 to 10 carbon atoms unsubstituted or substituted by -F, -Cl, -Br or -I; an aryl group having 6 to 20 carbon atoms unsubstituted or substituted by -F, -Cl, -Br or -I; or a heteroaryl group having 2 to 20 carbon atoms unsubstituted or substituted by -F, -Cl, -Br or -I, provided that the combination of $R_{21}$ and $R_{22}$ is different from the combination of $R_{23}$ and $R_{24}$.

According to an embodiment, $R_{21}$ to $R_{24}$ are each independently hydrogen or an alkyl group having 1 to 10 carbon atoms, but the combination of $R_{21}$ and $R_{22}$ may be different from the combination of $R_{23}$ and $R_{24}$.

According to an embodiment, $R_{21}$ to $R_{24}$ are independently hydrogen, a methyl group, an ethyl group, a propyl group, a butyl group, a pentyl group or a hexyl group, wherein the combination of $R_{21}$ and $R_{22}$ may be different from the combination of $R_{23}$ and R24.

According to an embodiment, the content of the asymmetric cyclic carbonate may be 20 wt% or less based on the total weight of the solvent. For example, the content of the asymmetric cyclic carbonate may be 18 wt% or less, 15 wt% or less, 12 wt% or less, 10 wt% or less, 1 to 20 wt%, 1 to 18 wt%, 1 to 15 wt%, 1 to 12 wt%, 1 to 10 wt%, 2 to 20 wt%, 2 to 18 wt%, 2 to 15 wt%, 2 to 12 wt%, 2 to 10 wt%, 4 to 20 wt%, 4 to 18 wt%, 4 to 15 wt%, 4 to 12 wt% or 4 to 10 wt%, based on the total weight of the solvent.

According to an embodiment, the solvent may further include at least one selected from an ester-based solvent, a glyme-based solvent, a dioxolane-based solvent, an ether-based solvent, a fluorinated ether-based solvent, a sulfone-based solvent, a ketone-based solvent, a nitrile-based solvent, and a carbonate-based compound.

The glyme-based solvent may include, for example, one or more selected from ethylene glycol dimethyl ether (1,2-dimethoxyethane), ethylene glycol diethyl ether (1,2-diethoxyethane), propylene glycol dimethyl ether, propylene glycol diethyl ether, butylene glycol dimethyl ether, butylene glycol diethyl ether, diethylene glycol dimethyl ether, triethylene glycol dimethyl ether, tetraethylene glycol dimethyl ether, diethylene glycol diethyl ether, triethylene glycol diethyl ether, tetraethylene glycol diethyl ether, dipropylene glycol dimethyl ether, tripropylene glycol dimethyl ether, tetrapropylene glycol dimethyl ether, dipropylene glycol diethyl ether, tripropylene glycol diethyl ether, tetrapropylene glycol diethyl ether, dibutylene glycol dimethyl ether, tributylene glycol dimethyl ether, tetrabutylene glycol dimethyl ether, dibutylene glycol diethyl ether, tributylene glycol diethyl ether, and tetrabutylene glycol diethyl ether.

The ester-based solvent may include, for example, one or more selected from methyl propionate, ethyl propionate, ethyl butyrate, methyl acetate, ethyl acetate, n-propyl acetate, dimethyl acetate, gamma-butyrolactone,

decanolide, gamma-valerolactone, mevalonolactone, and caprolactone.

The ether-based solvent may include, for example, at least one selected from dibutyl ether, tetraglyme, diglyme, dimethoxyethane, 2-methyltetrahydrofuran, and tetrahydrofuran.

The ketone-based solvent may include cyclohexanone, and the nitrile-based solvent may include at least one selected from acetonitrile (AN), succinonitrile (SN), and adiponitrile.

The fluorinated ether-based solvent may include, for example, at least one selected from 1,1,2,2-tetrafluoroethyl 2,2,3,3-tetrafluoropropyl ether, and 2,2,3,3,4,4,5,5-octafluoropentyl 1,1,2,2-tetrafluoroethyl ether.

The dioxolane-based solvent may include, for example, at least one selected from 1,3-dioxolane, 4,5-dimethyl-dioxolane, 4,5-diethyl-dioxolane, 4-methyl-1,3-dioxolane, 4-ethyl-1,3-dioxolane, 2-methyl-1,3-dioxolane, 2-vinyl-1,3-dioxolane, 2,2-dimethyl-1,3-dioxolane, 2-methoxy-1,3-dioxolane, and 2-ethyl-2-methyl-1,3-dioxolane.

The sulfone-based solvent may include, for example, at least one selected from dimethyl sulfone, diethyl sulfone, and ethyl methyl sulfone.

The carbonate-based solvent may include, for example, ethylene carbonate, propylene carbonate, dimethyl carbonate, diethyl carbonate, butylene carbonate, ethyl methyl carbonate, fluoroethylene carbonate, methyl propyl carbonate, ethyl propyl carbonate, methyl isopropyl carbonate, dipropyl carbonate, dibutyl carbonate, and the like.

According to an embodiment, the solvent may include at least one selected from a glyme-based solvent, a dioxolane-based solvent, a fluorinated ether-based solvent, a sulfone-based solvent, and a carbonate-based solvent.

According to an embodiment, the solvent may further comprise a fluorinated ether-based compound. According to an embodiment, the content of the fluorinated ether compound may be 50 vol% or less, for example, 0.1 vol% to 50 vol%, for example, 1 vol% to 30 vol%, based on the total amount of the solvent.

For example, the fluorinated ether-based compound may have a flash point of about 80 °C or higher, thus exhibiting excellent flame retardancy. When used as a solvent for a liquid electrolyte, it enables the production of a lithium battery with improved high-temperature stability. And the fluorine-substituted ether-based solvent has a structure in which a fluorine-substituted functional group is bonded centered on a $-CH_2-O-$ moiety and has low polarity. Therefore, these fluorine-substituted ether solvents have excellent miscibility with high-solubility ether solvents capable of solvating lithium ions, such as DME.

The fluorine-substituted ether solvent may be a compound represented by Formula 3.

[Formula 3] $R-CH_2-O-C_nF_{2n}H$

In Formula 3, R is $C_{m+1}H_mF_{2m}$ or $C_mF_{2m+1}$, n is an integer from 2 to 5, and m is an integer from 1 to 5.

The fluorine-substituted ether solvent represented by Formula 3 may be, for example, at least one selected from the group consisting of $HCF_2CF_2CH_2OCF_2CF_2H$, $HCF_2CF_2CH_2OCF_2CF_2CF_2H$, $HCF_2CF_2OCH_2CF_3$, $HCF_2CF_2OCH_2CH_2OCF_2CF_2H$, $HCF_2CF_2OCH_2CH_2OCF_2CF_2H$, $HCF_2CF_2OCH_2CH_2OCF_2CF_2H$, $HCF_2CF_2OCH_2CH_2OCF_2CF_2H$, HCF2CF2OCF2CF2CF2H, $HCF_2CF_2OCH_2CH_2OCF_2CF_2CF_2H$, and $HCF_2CF_2OCH_2CH_2CH_2OCF_2CF_2CF_2H$.

The fluorine-substituted ether solvent represented by Formula 3 may be, for example, 1,1,2,2-tetrafluoroethyl 2,2,3,3-tetrafluoropropyl ether, or 2,2,3,3,4,4,5,5-octafluoropentyl 1,1,2,2-tetrafluoroethyl ether.

According to another embodiment, the electrolyte may further include, in addition to the organic solvent described above, at least one selected from gamma-butyrolactone, succinonitrile, adiponitrile, benzonitrile, acetonitrile, tetrahydrofuran, 2-methyltetrahydrofuran, γ-butyrolactone, 4-methyldioxolane, N,N-dimethylformamide, N,N-dimethylacetamide, dimethyl sulfoxide, dioxane, sulfolane, dichloroethane, chlorobenzene, and nitrobenzene.

According to an embodiment, the electrolyte may include a first lithium salt and a second lithium salt. For example, the dissociation degree of the first lithium salt with respect to the fluorine-containing linear ester may be greater than the dissociation degree of the second lithium salt with respect to the fluorine-containing linear ester.

According to an embodiment, the first lithium salt and the second lithium salt may satisfy Expression 1.

<Expression 1>

$$|E_{Li\text{-}A1}| < |E_{Li\text{-}A2}|$$

In Expression 1,

$|E_{Li\text{-}A1}|$ is the absolute value of the interaction energy between the first anion and the lithium ion, measured using the DFT method of the Gaussian program with structure optimization at the M062X/6-311+G** level, and

$|E_{Li\text{-}A2}|$ is the absolute value of the interaction energy between the second anion and the lithium ion, measured using the DFT method of the Gaussian program with structure optimization at the M062X/6-311+G** level.

For example, when the first lithium salt and the second lithium salt satisfy Expression 1, the condition in which the dissociation degree of the first lithium salt is greater than which the dissociation degree of the second lithium salt may be more easily satisfied.

For example, the $|E_{Li-A1}|$ may be proportional to the binding energy value between the lithium ion and the first anion. In this case, the smaller the $|E_{Li-A1}|$, the lower the binding energy between the lithium ion and the first anion, so that the first lithium salt may be more easily dissociated into the lithium ion and the first anion in the solvent. For example, the above $|E_{Li-A2}|$ may be proportional to the binding energy value between the lithium ion and the second anion. In this case, the larger the $|E_{Li-A2}|$, the greater the binding energy between the lithium ion and the second anion, so that the second lithium salt may not easily dissociate into the lithium ion and the second anion in the solvent. Accordingly, the dissociation degree of the first lithium salt may be greater than the dissociation degree of the second lithium salt.

For example, when the first lithium salt and the second lithium salt satisfy Expression 1, the first lithium salt having a large dissociation degree may improve the lithium ion conductivity of the electrolyte including it, and the second lithium salt having a small dissociation degree may form a protective layer on the anode, hereby improving the lifetime characteristics of the lithium battery including the electrolyte.

According to an embodiment, the first lithium salt and the second lithium salt may satisfy Expression 2.

<Expression 2>

$$|E_{Li-A1} - E_{Li-A2}| > 0.3 \text{ eV}$$

In Expression 2,
$|E_{Li-A1}|$ is the absolute value of the interaction energy between the first anion and the lithium ion, measured using the DFT method of the Gaussian program with structure optimization at the M062X/6-311+G** level, and $|E_{Li-A2}|$ is the absolute value of the interaction energy between the second anion and the lithium ion, measured using the DFT method of the Gaussian program with structure optimization at the M062X/6-311+G** level.

For example, when the difference between the $|E_{Li-A1}|$ and the $|E_{Li-A2}|$ satisfies Expression 2, the lithium ion conductivity improvement effect of the first lithium salt and the protective layer formation effect of the second lithium salt may be further improved.

According to an embodiment, the value of $|E_{Li-A1} - E_{Li-A2}|$ in Formula 2 may be greater than 0.4 eV, greater than 0.5 eV, greater than 0.6 eV, greater than 0.7 eV, greater than 0.8 eV, from 0.2 eV to 2 eV, from 0.2 eV to 1.8 eV, from 0.2 eV to 1.6 eV, from 0.2 eV to 1.4 eV, from 0.2 eV to 1.2 eV, from 0.4 eV to 2 eV, from 0.6 eV to 2 eV, from 0.8 eV to 2 eV, or from 0.2 eV to 1.2 eV.

According to an embodiment, the first lithium salt may satisfy Expression 3, and the second lithium salt may satisfy Expression 4.

<Expression 3>

$$|E_{Li-A1}| \leq 5.55 \text{ eV}$$

In Expression 3,
$|E_{Li-A1}|$ is the absolute value of the interaction energy between the first anion and the lithium ion, measured using the DFT method of the Gaussian program with structure optimization at the M062X/6-311+G** level.

<Expression 4>

$$|E_{Li-A2}| > 5.55 \text{ eV}$$

In Expression 4,
$|E_{Li-A2}|$ is the absolute value of the interaction energy between the second anion and the lithium ion, measured using the DFT method of the Gaussian program with structure optimization at the M062X/6-311+G** level.

For example, when the first lithium salt satisfies Expression 3, the dissociation degree of the first lithium salt may be further improved, and the lithium ion conductivity of the electrolyte including the first lithium salt may be further improved.

According to an embodiment, the value of $|E_{Li-A1}|$ in Expression 3 may be 5.5 eV or less, 5.4 eV or less, 5.3 eV or less, 5.2 eV or less, 5.1 eV or less, or 5 eV or less.

For example, when the second lithium salt satisfies Expression 4, a protective layer may be formed more easily on the anode included in the lithium battery described below from the second lithium salt.

According to an embodiment, the value of $|E_{Li-A2}|$ in Expression 4 may be greater than 5.5 eV, greater than 5.6 eV, greater than 5.7 eV, or greater than 5.8 eV. For example, the value of $|E_{Li-A2}|$ in Expression 4 may be greater than 5.5 eV and less than or equal to 6.5 eV, greater than 5.5 eV and less than or equal to 6.4 eV, greater than 5.5 eV and less than or equal to 6.3 eV, greater than 5.5 eV and less than or equal to 6.2 eV, greater than 5.5 eV and less than or equal to 6.1 eV, greater than 5.5 eV and less than or equal to 6.0 eV, or greater than 5.5 eV and less than or equal to 5.9 eV.

According to an embodiment, the first lithium salt and the second lithium salt may form a protective layer on the anode when applied to a lithium battery.

According to an embodiment, the first lithium salt may include lithium difluoro(bisoxalato)phosphate (LiDFOP), lithium bis(oxalato)borate (LiBOB), lithium fluoromalonato(difluoro)borate (LiFMDFB), lithium 2-trifluoromethyl-4,5-dicyanoimidazole (LiTDI), $LiBSO_4F_2$, $LiPF_6$, lithium difluoro(oxalato)borate (LiDFOB), or any combination thereof. For example, the first lithium salt may include lithium difluoro(bisoxalato)phosphate (LiDFOP), lithium bis(oxalato)borate (LiBOB), lithium fluoromalonato(difluoro)borate (LiFMDFB), lithium 2-trifluoromethyl-4,5-dicyanoimidazole (LiTDI), $LiBSO_4F_2$, or any combination thereof. According to an embodiment, the first lithium salt may include lithium difluoro(bisoxalato)phosphate (LiDFOP), lithium bis(oxalato)borate (LiBOB), lithium fluoromalonato(difluoro)borate (LiFMDFB), lithium 2-trifluoromethyl-4,5-dicyanoimidazole (LiTDI), or any combination thereof.

According to an embodiment, the second lithium salt may include $LiPOF_4$, $LiPO_2F_2$, $LiBF_4$, $LiCF_3SO_3$, lithium bis(trifluoromethanesulfonyl)imide (LiTFSI), lithium bis(fluorosulfonyl)imide) (LiFSI), lithium 4,5-dicyano-1,2,3-triazolate (LiDCTA), lithium difluoro(oxalato)borate (LiDFOB), or any combination thereof. For example, the second lithium salt may include $LiPOF_4$, $LiPO_2F_2$, $LiBF_4$, $LiCF_3SO_3$, lithium bis(trifluoromethanesulfonyl)imide (LiTFSI), lithium bis(fluorosulfonyl) imide) (LiFSI), lithium 4,5-dicyano-1,2,3-triazolate (LiDCTA), or any combination thereof.

According to an embodiment, the electrolyte may further include a lithium salt other than the lithium salt described above.

For example, the lithium salt may be any lithium salt generally used in the preparation of electrolytes in the relevant technical field.

According to an embodiment, the lithium salt may be LiSCN, $LiN(CN)_2$, $Li(CF_3SO_2)_3C$, $Li(FSO_2)_2N$(LiFSI), $LiC_4F_9SO_3$, $LiN(SO_2CF_2CF_3)_2$, $LiPF_3(C_2F_5)_3$, LiCl, LiF, LiBr, LiI, $LiB(C_2O_4)$, $LiPF_6$, $LiPF_5(CF_3)$, $LiPF_5(C_2F_5)$, $LiPF_5(C_3F_7)$, $LiPF_4(CF_3)_2$, $LiPF_4(CF_3)(C_2F_5)$, $LiPF_3(CF_3)_3$, $LiPF_3(CF_2CF_3)_3$, $LiPF_4(C_2O_4)_2$, $LiBF_4$, $LiBF_3(C_2F_5)$, lithium tetrafluoro(oxalato)phosphate, lithium difluoro(bisoxalato)phosphate, lithium bis(oxalato)borate (LiBOB), lithium oxalyldifluoroborate (LiODFB), lithium difluoro(oxalato)borate (LiDFOB), lithium bis(trifluoromethanesulfonyl)imide, LiTFSI, $LiN(SO_2CF_3)_2$, lithium bis(fluorosulfonyl)imide LiFSI, $LiN(SO_2F)_2)$, $LiN(SO_2C_2F_5)2$, $LiCF_3SO_3$, $LiAsF_6$, $LiSbF_6$, $LiClO_4$, or mixtures thereof.

According to an embodiment, the sum of the concentrations of the first lithium salt and the second lithium salt in the electrolyte is 0.1 to 10.0 M, for example, 0.1 to 5.0 M, 0.1 to 4.0 M, 1 to 10.0 M, 1 to 5.0 M, 1 to 4.0 M, 2 to 10.0 M, 2 to 5.0 M or 2 to 4.0 M. When the concentration of the lithium salt is within the above range, further improved lithium secondary battery characteristics may be obtained.

According to an embodiment, the electrolyte may further include one or more selected from an ionic liquid and a polymeric ionic liquid.

For example, the ionic liquid may be used without limitation as long as it is an ionic substance that is in a molten state at room temperature (25 °C) and contains cations and anions.

The cation of the ionic liquid may include imidazolium, ammonium, pyrrolidinium, or piperidinium, and the anion of the ionic liquid may include bis(fluorosulfonyl)imide, bis(fluorosufonyl)amide, fluoroborate, or fluorophosphate.

The cation of the ionic liquid may include alkylammonium such as triethylammonium, imidazolium such as ethylmethylimidazolium or butylmethylimidazolium, pyrrolidinium such as 1-methyl-1-propylpyrrolidinium, or methylpropylpiperidinium.

The anion of the ionic liquid may include bis(trifluoromethylsulfonyl)imide (TFSI), bis(pentafluoroethylsufonyl) amide (BETI), tetrafluoroborate ($BF_4$), or hexafluorophosphate ($PF_6$).

For example, the ionic liquid may include [emim]Cl/$AlCl_3$(emim = ethyl methyl imidazolium), [bmpyr]$NTf_2$(bppyr = butyl methyl pyridinium), [bpy]Br/$AlCl_3$(bpy = 4, 4'-bipyridine), [choline]Cl/$CrCl_3 \cdot 6H_2O$, [Hpy$(CH_2)_3$pyH]$[NTf_2]_2$ (NTf = trifluoromethanesulfonimide), [emim]OTf/[hmim]I(hmim = hexyl methyl imidazolium), [choline]Cl/$HOCH_2CH_2OH$, [$Et_2MeN(CH_2CH_2OMe)$]$BF_4$ (Et = ethyl, Me = methyl, Pr = propyl, Bu = butyl, Ph = phenyl, Oct = octyl, Hex = hexyl), [$Bu_3PCH_2CH_2C_8F_{17}$]OTf(OTf = trifluoromethane sulfonate), [bmim]$PF_6$(bmim = butyl methyl imidazolium), [bmim]$BF_4$, [omim]$PF_6$(omim = octyl methyl imidazolium), [$Oct_3PC_{18}H_{37}$]I, [NC$(CH_2)_3$mim]$NTf_2$(mim = methyl imidazolium), [$Pr_4N$] [$B(CN)_4$], [bmim]$NTf_2$, [bmim]Cl, [bmim][$Me(OCH_2CH_2)_2OSO_3$], [$PhCH_2$mim]OTf, [$Me_3NCH(Me)CH(OH)Ph$] $NTf_2$, [pmim][$(HO)_2PO_{2}$] (pmim = propyl methyl imidazolium), [b(6-Me)quin]$NTf_2$(bquin = butyl quinolinium, [bmim][$Cu_2Cl_3$], [$C_{18}H_{37}OCH_2$mim]$BF_4$(mim = methyl imidazolium), [heim]$PF_6$(heim = hexyl ethyl imidazolium), [mim$(CH_2CH_2O)_2CH_2CH_2$mim]$[NTf_2]_2$(mim = methyl imidazolium), [obim]$PF_6$(obim = octyl butyl imidazolium), [oquin] $NTf_2$(oquin) = octyl quinolinium), [hmim][$PF_3(C_2F_5)_3$], [$C_{14}H_{29}$mim]Br(mim = methyl imidazolium), [$Me_2N(C_{12}H_{25})_2$]$NO_3$, [emim]$BF_4$, [mm(3-$NO_2$)im][dinitrotriazolate], [$MeN(CH_2CH_2OH)_3$], [$MeOSO_3$], [$Hex_3PC_{14}H_{29}$]$NTf_2$, [emim][$EtOSO_3$],

[choline][ibuprofenate], [emim]$NTf_2$, [emim][$(EtO)_2PO_2$], [emim]Cl/$CrCl_2$, [$Hex_3PC_{14}H_{29}$]$N(CN)_2$, or any combination thereof.

The polymeric ionic liquid may include an ionic compound in the form of a polymer composed of an organic cation including an imidazolium group and an organic or inorganic anion.

For example, the organic cation of the polymeric ionic liquid may include poly(1-vinyl-3-alkylimidazolium), poly(1-allyl-3-alkylimidazolium), or poly(1-(meth)acryloyloxy-3-alkylimidazolium). The organic anion of the polymeric ionic liquid may include $CH_3COO^-$, $CF_3COO^-$, $CH_3SO_3$ -, $CF_3SO_3$ -, $(CF_3SO_2)_2N^-$, $(CF_3SO_2)_3C^-$, $(CF_3CF_2SO_2)_2N^-$, $C_4F_9SO_3$ -, $C_3F_7COO^-$, $(CF_3SO_2)(CF_3CO)N^-$.

For example, the polymeric ionic liquid may include poly(1-vinyl-3-alkylimidazolium), poly(1-allyl-3-alkylimidazolium), poly(1-(meth)acryloyloxy-3-alkylimidazolium), or any combination thereof.

According to an embodiment, the viscosity of the electrolyte may be 5 cP or less at 25 °C. For example, when the electrolyte satisfies the viscosity range described above, the movement of ions in the electrolyte may be free and the ion conductivity can be excellent. For example, the ionic conductivity of the electrolyte may be 1.0 mS/cm to 5.0 mS/cm at 25 °C.

According to an embodiment, the electrolyte may have a liquid, gel or semi-solid form. Compared to the case where the electrolyte is in a fully solid form, the use of a liquid, gel, or semi-solid form allows one or more selected from lithium metal and lithium alloy to expand freely during charge and discharge, thereby solving the above-mentioned drawbacks of conventional lithium metal batteries.

[Lithium battery 100]

Referring to FIGS. 1 and 2, a lithium battery according to an embodiment will be described in detail.

For example, referring to FIG. 1, the lithium battery may be a lithium non-anode metal battery 100. For example, referring to FIG. 2, the lithium battery may be a lithium metal battery 200.

A lithium battery according to an embodiment may include a cathode; an anode; and an electrolyte disposed between the cathode and the anode, the electrolyte may be the above-described electrolyte.

According to an embodiment, the electrolyte may be in a liquid or gel form.

A lithium battery according to an embodiment may include: an anode current collector 110 that does not have a plate-shaped lithium metal thin film as shown in FIG. 1; an electrolyte 120 disposed on the anode current collector 110; and a cathode 150 disposed on the electrolyte 120. In this case, the anode may include only the anode current collector 110 without a lithium metal thin film, and the cathode 250 may include a cathode current collector 140 and a cathode active material layer 130 disposed on the cathode current collector 140.

A lithium battery 200 according to an embodiment may further include a metal layer 225 disposed between the anode current collector 210 and the electrolyte 220, as shown in FIG. 2. In this case, the anode may include: the anode current collector 210; and the metal layer 225 disposed between the anode current collector 210 and the electrolyte 220. For example, the lithium battery 200 may include the anode current collector 110, a metal layer 225 disposed on the anode current collector 110, an electrolyte 120 disposed on the metal layer 225, and a cathode 150 disposed on the electrolyte 120. For example, the metal layer 225 may include lithium metal or a lithium alloy. For example, during the discharge process, the metal layer 225 may dissociate into lithium ions and metal cations, resulting in a reduction in the thickness of the metal layer 225. Conversely, lithium ions may be precipitated from the metal layer 225 during the charging process, thereby increasing the thickness of the metal layer 225.

According to an embodiment, the lithium battery including the electrolyte described above may further include a protective layer (not shown) disposed between the anode and the electrolyte during a charge/discharge process. For example, a protective layer (not shown) may be formed between the anode and the electrolyte through interaction of the first lithium salt, the second lithium salt, and the solvent described above.

Referring to FIG. 1, the protective layer (not shown) may be formed between the anode current collector 110 and the electrolyte 120.

Referring to FIG. 2, the protective layer (not shown) can be formed on the anode current collector 110 and the electrolyte 120. For example, the protective layer (not shown) may be formed between the metal layer 225 and the electrolyte 120.

[Anode current collector 110, 210]

For example, the material constituting the anode current collector 110, 210 may be any conductive material that does not react with lithium, i.e., that does not form an alloy or compound with lithium. The metal substrate is, for example, a metal or an alloy. The metal substrate may be made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or alloys thereof. The current collector 200 may have a form selected from, for example, a sheet, foil, film, plate, porous body,

mesoporous body, through-hole body, polygonal ring body, mesh, foam, and nonwoven fabric, but is not necessarily limited to these, and any form commonly used in the relevant technical field may be employed.

For example, the anode current collector 110, 210 may have a reduced thickness compared to conventional anode current collectors included in traditional anodes. Accordingly, the anode according to the present disclosure is distinguished from conventional electrodes that include a thick-film current collector by including, for example, a thin-film current collector. By employing a thin-film current collector having a reduced thickness, the electrode according to an embodiment allows the thickness of the anode active material layer in the anode including the thin-film current collector to be relatively increased. As a result, the energy density of a lithium metal battery employing such an electrode is increased. The thickness of the anode current collector 110, 210 may be, for example, less than 15 μm, 14.5 μm or less, or 14 μm or less. For example, the thickness of the anode current collector 110, 210 may be in the range of 0.1 μm to less than 15 μm, 1 μm to 14.5 μm, 2 μm to 14 μm, 3 μm to 14 μm, 5 μm to 14 μm, or 10 μm to 14 μm.

The material constituting the anode current collector 110, 210 may be any conductive material that does not react with lithium, i.e., that does not form an alloy or compound with lithium. The anode current collector 110, 210 may be, for example, a metal or an alloy. The anode current collector 210 may be composed of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The anode current collector 110, 210 may have a form selected from, for example, a sheet, foil, film, plate, porous body, mesoporous body, through-hole-containing body, polygonal ring body, mesh, foam, or nonwoven fabric. However, it is not necessarily limited to these forms, and any form commonly used in the relevant technical field may be employed.

The anode current collector 110, 210 may include, for example, a base film and a metal substrate layer disposed on one or both surfaces of the base film. The anode current collector 110, 210 may include a substrate, which may have a structure including, for example, a base film and a metal substrate layer disposed on one or both surfaces of the base film. An intermediate layer may additionally be disposed on the metal substrate layer.

For example, the base film may include a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combinations thereof. By including a thermoplastic polymer, the base film may melt in the event of a short circuit, thereby suppressing a rapid increase in current. The base film may be, for example, an insulator. The metal substrate layer may include, for example, copper (Cu), stainless steel, titanium (Ti), iron (Fe), cobalt (Co), nickel (Ni), or alloys thereof. The metal substrate layer may act as an electrochemical fuse and be severed under overcurrent conditions, thereby serving a short-circuit prevention function. The threshold current and maximum current may be adjusted by adjusting the thickness of the metal substrate layer. The metal substrate layer may be plated or deposited on the base film. As the thickness of the metal substrate layer becomes thinner, the threshold current and/or maximum current of the anode current collector 110, 210 may decrease, thereby improving the safety of the lithium metal battery in the event of a short circuit. A lead tab may be additionally provided on the metal substrate layer for external connection. The lead tab may be welded to the metal substrate layer or the metal substrate layer/base film laminate by ultrasonic welding, laser welding, spot welding, or the like. During welding, the base film and/or metal substrate layer may melt, and the metal substrate layer may be electrically connected to the lead tab. To enhance the robustness of the welding between the metal substrate layer and the lead tab, a metal chip may be additionally provided between the metal substrate layer and the lead tab. The metal chip may be a thin piece of the same material as the metal of the metal substrate layer. The metal chip may be, for example, a metal foil, a metal mesh, etc. The metal chip may be, for example, aluminum foil, copper foil, SUS foil, etc. After placing the metal chip on the metal substrate layer and welding it with the lead tab, the lead tab may be welded to the metal chip/metal substrate layer laminate or to the metal chip/metal substrate layer/base film laminate. During welding, the base film, metal layer, and/or metal chip may melt, allowing the metal layer or the metal layer/metal chip laminate to be electrically connected to the lead tab. A metal chip and/or lead tab may be additionally provided on a portion of the metal substrate layer. The thickness of the base film may be, for example, from 1 to 50 μm, from 1.5 to 50 μm, from 1.5 to 40 μm, or from 1 to 30 μm. By having a thickness within these ranges, the weight of the anode assembly may be more effectively reduced. The melting point of the base film may be, for example, from 100 to 300 °C, from 100 to 250 °C, or from 100 to 200 °C. With a melting point in these ranges, the base film may melt during the lead tab welding process and be easily bonded to the lead tab. To improve adhesion between the base film and the metal substrate layer, surface treatment such as corona treatment may be performed on the base film. The thickness of the metal substrate layer may be, for example, from 0.01 to 3 μm, from 0.1 to 3 μm, from 0.1 to 2 μm, or from 0.1 to 1 μm. By having a thickness within these ranges, the metal substrate layer may maintain conductivity while ensuring the stability of the anode. The thickness of the metal chip may be, for example, from 2 to 10 μm, from 2 to 7 μm, or from 4 to 6 μm. By having a thickness within the above range, the metal chip may facilitate the connection between the metal layer and the lead tab. With the anode current collector 110 or 210 having such a structure, the weight of the electrode may be reduced, and as a result, the energy density may be improved.

According to an embodiment, prior to performing charge and discharge, a metal layer 225 including a plate-shaped lithium metal thin film may be free (i.e., absent) on the anode current collector 110. For example, in the case of an

anode-free lithium metal battery in which a plate-shaped lithium metal thin film is absent on the anode current collector 110 before charge and discharge, dendrite formation may be suppressed, thereby further improving lifetime characteristics.

According to another embodiment, a metal layer 225 including a plate-shaped lithium metal thin film may be disposed on the anode current collector 210 before performing charge and discharge. For example, during the process of disposing the electrolyte on the metal layer 225 arranged on the anode current collector 210, metal cations included in the electrolyte may react with the metal layer 225, and the metal cations may be deposited as metal. The deposited metal cations may dissociate into metal cations during discharge.

According to an embodiment, a protective layer (not shown) derived from the first lithium salt and the second lithium salt may further be included, disposed on the anode current collector 210. For example, a protective layer (not shown) derived from the first lithium salt and the second lithium salt may further be included, disposed on the metal layer 225.

According to an embodiment, the anode may further include an interlayer disposed between the anode current collector 210 and the metal layer 225.

According to an embodiment, the interlayer may be directly disposed, for example, on one or both surfaces of the anode current collector 210. Accordingly, no other layer may be disposed between the anode current collector 210 and the interlayer. By directly disposing the interlayer on one or both surfaces of the anode current collector 210, the adhesion between the anode current collector 210 and the metal layer 225 may be further improved.

The thickness of the interlayer (not shown) may be, for example, 30 % or less of the thickness of the anode current collector 210. For example, the thickness of the interlayer (not shown) may be 0.01 to 30 %, 0.1 to 30 %, 0.5 to 30 %, 1 to 25 %, 1 to 20 %, 1 to 15 %, 1 to 10 %, 1 to 5 %, or 1 to 3 %, of the thickness of the anode current collector 210. The thickness of the interlayer (not shown) may be, for example, from 10 nm to 5 $\mu$m, from 50 nm to 5 $\mu$m, from 200 nm to 4 $\mu$m, from 500 nm to 3 $\mu$m, from 500 nm to 2 $\mu$m, from 500 nm to 1.5 $\mu$m, or from 700 nm to 1.3 $\mu$m. By having a thickness within these ranges, the interlayer (not shown) may further improve the adhesion between the anode current collector 210 and the metal layer 225, and suppress an increase in interfacial resistance.

For example, the interlayer may include a binder. By including a binder in the interlayer, the adhesion between the anode current collector 210 and the metal layer 225 may be further improved. The binder included in the interlayer (not shown) may be, for example, a conductive binder or a non-conductive binder.

The conductive binder may be, for example, an ion-conductive binder and/or an electron-conductive binder. A binder having both ion conductivity and electron conductivity may fall under both ion-conductive and electron-conductive binders.

The ion-conductive binder may include, for example, polystyrene sulfonate (PSS), polyvinylidene fluoride-hexafluoropropylene copolymer (PVDF-HFP), polyvinyl fluoride (PVF), polyvinylidene fluoride (PVDF), polymethyl methacrylate (PMMA), polyethylene oxide (PEO), polyethylene glycol (PEG), polyacrylonitrile (PAN), polytetrafluoroethylene (PTFE), polyethylenedioxythiophene (PEDOT), polypyrrole (PPY), polyaniline, and polyacetylene. The ion-conductive binder may include polar functional groups. Examples of ion-conductive binders including polar functional groups are Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi$^+$) and the like. Examples of electron-conductive binders include polyacetylene, polythiophene, polypyrrole, poly(p-phenylene), poly(phenylenevinylene), poly(phenylenesulfide), polyaniline. The interlayer may be, for example, a conductive layer including a conductive polymer.

The binder included in the interlayer may be, for example, a fluorinated binder. The fluorinated binder included in the interlayer may be, for example, polyvinylidene fluoride (PVDF). The interlayer may be disposed on the anode current collector 210 by a dry or wet process. The interlayer may be, for example, a binding layer including a binder.

The interlayer may further include, for example, a carbon-based conductive material. By including a carbon-based conductive material, the interlayer may function as a conductive layer. The interlayer may be, for example, a conductive layer including a binder and a carbon-based conductive material.

The interlayer may be disposed on the anode current collector 210 by a dry process such as deposition using CVD or PVD. The interlayer may be disposed on the anode current collector 210 by a wet process such as spin coating or dip coating. The interlayer may be disposed on the anode current collector 210 by depositing a carbon-based conductive material via deposition. The dry-coated interlayer may be composed of a carbon-based conductive material and may not include a binder. Alternatively, the interlayer may be disposed on the anode current collector by coating a composition including a carbon-based conductive material, a binder, and a solvent on the surface of the anode current collector and drying it. The interlayer may have a single-layer structure or a multilayer structure including a plurality of layers.

[Anode: Metal layer]

Referring to FIG. 2, the lithium battery 200 may further include a metal layer 225 disposed between the anode

current collector 210 and the electrolyte 220. For example, the metal layer 225 may include lithium metal or a lithium alloy.

For example, the lithium metal or lithium alloy may be formed on the anode current collector 110 by electrodeposition of lithium ions included in the electrolyte 120 as the lithium battery 200 is charged. For instance, the metal layer 225 may include both a lithium alloy and lithium metal. For example, the lithium alloy included in the metal layer 225 may reduce the reactivity of lithium metal, thereby effectively preventing side reactions between the metal layer 225 and the electrolyte 120. Additionally, since the metal layer 225 has excellent electrical conductivity, the internal resistance of the lithium battery 200 including the same may be reduced. Accordingly, the lithium battery 200 including the metal layer 225 may exhibit improved cycle life characteristics as well as enhanced charge/discharge efficiency.

According to an embodiment, the metal layer 225 may include, for example, lithium foil, lithium powder, plated lithium, a carbon-based material, or a combination thereof. For instance, the metal layer 225 may include lithium foil. For example, the metal layer 225 may be formed by coating a slurry including lithium powder and a binder on the anode current collector 210. The binder may be, for example, a fluorinated binder such as polyvinylidene fluoride (PVDF).

According to an embodiment, the metal layer 225 may not include a carbon-based anode active material. Therefore, the metal layer 225 may be composed of a metal-based anode active material.

For example, the thickness of the metal layer 225 may be from 0.1 μm to 100 μm, from 0.1 μm to 80 μm, from 1 μm to 80 μm, or from 10 μm to 80 μm, however, it is not necessarily limited to these ranges and may be adjusted depending on the type, capacity, and other requirements of the lithium battery. If the thickness of the metal layer 225 is excessively increased, the structural stability of the lithium battery may deteriorate and side reactions may increase. If the thickness of the metal layer 225 is too small, the energy density of the lithium metal battery may be reduced.

According to an embodiment, the thickness of the lithium foil may be from 1 μm to 50 μm, from 1 μm to 30 μm, or from 10 μm to 30 μm, or from 10 μm to 80 μm. By having such a thickness, the cycle life characteristics of the lithium battery may be further improved.

According to one embodiment, the particle size of the lithium powder may be from 0.1 μm to 3 μm, from 0.1 μm to 2 μm, or from 0.1 μm to 2 μm. By having such a particle size, the cycle life characteristics of the lithium battery can be further improved.

[Electrolyte 120]

For example, the electrolyte 120 may include a first lithium salt; a second lithium salt; and a solvent including a fluorine-containing linear ester, as described above.

According to another embodiment, the electrolyte 120 may further include a nonwoven fabric. The nonwoven fabric may serve to support at least one selected from lithium metal and lithium alloy that is deposited during the charging process. For example, the nonwoven fabric may be omitted. For example, if the anode current collector is of the mesh type, it is not necessary to use non-woven fabric.

The porosity of the nonwoven fabric may be 10 to 90 vol%, for example 10 to 80 vol%, or for example 10 to 50 vol%, or for example 25 to 50 vol%. The average pore size may be 0.1 to 10 μm, for example 0.01 to 8 μm, or for example 0.1 to 1.0 μm. The average pore size refers to the diameter in the case of spherical pores, or the major axis length in the case of non-spherical pores.

According to an embodiment, the nonwoven fabric may include one or more nonwoven fabrics selected from cellulose and polyesters (e.g., polyethylene terephthalate (PET), polyetherimide, polyethylene, polypropylene, polyethylene terephthalate, polybutylene terephthalate, polyamide, polyacetal, polycarbonate, polyimide, polyether ketone, polyether sulfone, polyphenylene oxide, polyphenylene sulfide, polyethylene naphthalate, polytetrafluoroethylene, polyvinylidene fluoride, polyvinyl chloride, polyacrylonitrile, nylon, and polyparaphenylene benzobisoxazole.

[Cathode]

As shown in FIGS. 1 and 2, a cathode 150, 250 is formed by disposing a cathode active material layer 130, 230 on a cathode current collector 140, 240. More specifically, the cathode active material layer 130, 230 may be disposed on the electrolyte 120, 220, and the cathode current collector 140, 240 may be disposed on the cathode active material layer 130, 230.

[Cathode: Cathode Current Collector]

Referring to FIGS. 1 and 2, the cathode 150, 250 includes a cathode current collector 140, 240. For example, the cathode 150, 250 may be prepared by forming the cathode active material layer 130, 230 on the cathode current collector 140, 240.

For example, the cathode current collector 140, 240 may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an

alloy thereof.

According to an embodiment, the cathode current collector 140, 240 may include aluminum (Al).

[Cathode: Cathode Active Material Layer]

The cathode active material layer 130, 230 may include a cathode active material, a conductive material, and a binder.

For example, the cathode active material may use at least one of a composite oxide of lithium and a metal selected from cobalt, manganese, nickel, and combinations thereof. Specific examples include compounds represented by any one of $Li_aA_{1-b}B^1{}_bD^1{}_2$ (where $0.90 \le a \le 1.8$, and $0 \le b \le 0.5$); $Li_aE_{1-b}B^1{}_bO_{2-c}D^1{}_c$ (where $0.90 \le a \le 1.8$, $0 \le b \le 0.5$, $0 \le c \le 0.05$); $LiE_{2-b}B^1{}_bO_{4-c}D^1{}_c$ (where $0 \le b \le 0.5$, $0 \le c \le 0.05$); $Li_aNi_{1-b-c}Co_bB^1{}_cD^1{}_\alpha$ (where $0.90 \le a \le 1.8$, $0 \le b \le 0.5$, $0 \le c \le 0.05$, $0 < \alpha \le 2$); $Li_aNi_{1-b-c}Co_bB^1{}_cO_{2-\alpha}F^1{}_\alpha$ (where $0.90 \le a \le 1.8$, $0 \le b \le 0.5$, $0 \le c \le 0.05$, $0 < \alpha < 2$); $Li_aNi_{1-b-c}Co_bB^1{}_cO_{2-\alpha}F^1{}_2$(where $0.90 \le a \le 1.8$, $0 \le b \le 0.5$, $0 \le c \le 0.05$, $0 < \alpha < 2$); $Li_aNi_{1-b-c}Mn_bB^1{}_cD_\alpha$ (where $0.90 \le a \le 1.8$, $0 \le b \le 0.5$, $0 \le c \le 0.05$, $0 < \alpha \le 2$); $Li_aNi_{1-b-c}Mn_bB^1{}_cO_{2-\alpha}F^1{}_\alpha$ (where $0.90 \le a \le 1.8$, $0 \le b \le 0.5$, $0 \le c \le 0.05$, $0 < \alpha < 2$); $Li_aNi_{1-b-c}Mn_bB^1{}_cO_{2-\alpha}F^1{}_2$ (where $0.90 \le a \le 1.8$, $0 \le b \le 0.5$, $0 \le c \le 0.05$, $0 < \alpha < 2$); $Li_aNi_bE_cG_dO_2$ (where $0.90 \le a \le 1.8$, $0 \le b \le 0.9$, $0 \le c \le 0.5$, $0.001 \le d \le 0.1$.); $Li_aNi_bCo_cMn_dGeO_2$ (where $0.90 \le a \le 1.8$, $0 \le b \le 0.9$, $0 \le c \le 0.5$, $0 \le d \le 0.5$, $0.001 \le e \le 0.1$.); $Li_aNiG_bO_2$ (where, $0.90 \le a \le 1.8$, $0.001 \le b \le 0.1$.); $Li_aCoG_bO_2$ (where $0.90 \le a \le 1.8$, $0.001 \le b \le 0.1$.); $Li_aMnG_bO_2$ (where $0.90 \le a \le 1.8$, $0.001 \le b \le 0.1$.); $Li_aMn_2G_bO_4$ (where $0.90 \le a \le 1.8$, $0.001 \le b \le 0.1$.); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$.

In the above Formulae, A is Ni, Co, Mn, or a combination thereof; $B^1$ is Al, Ni, Co, Mn, Cr, Fe, Mg, Sr, V, Ga, Si, W, Mo, Cu, Zn, Ti, boron (B), a rare earth element, or a combination thereof; $D^1$ is O, F, S, P, or a combination thereof; E is Co, Mn, or a combination thereof; $F^1$ is F, S, P, Cl, Br, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J may be V, Cr, Mn, Co, Ni, Cu, or a combination thereof.

For example, the cathode active material may include a lithium transition metal oxide containing nickel and other transition metals. In the lithium transition metal oxide containing nickel and other transition metals, the content of nickel may be 60 mol% or more, for example 75 mol% or more, 80 mol% or more, 85 mol% or more, or 90 mol% or more, based on the total moles of the transition metals.

For example, the lithium transition metal oxide may be a compound represented by Formula 3:

<Formula 3> $Li_aNi_xCo_yM_zO_{2-b}A_b$

In Formula 3, $1.0 \le a \le 1.2$, $0 \le b \le 0.2$, $0.6 \le x < 1$, $0 \le y \le 0.3$, $0 < z \le 0.3$, $x + y + z = 1$, M is one or more selected from the group consisting of manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and boron (B), and

A is F, S, Cl, Br, or a combination thereof.

In Formula 3, for example, $0.7 \le x < 1$,$0 < y \le 0.3$, $0 < z \le 0.3$; $0.8 \le x < 1$, $0 < y \le 0.3$, $0 < z \le 0.3$; $0.8 \le x < 1$, $0 < y \le 0.2$, $0 < z \le 0.2$; $0.83 \le x < 0.97$, $0 < y \le 0.15$, $0 < z \le 0.15$; or $0.85 \le x < 0.95$, $0 < y \le 0.1$, $0 < z \le 0.1$.

For example, the lithium transition metal oxide may be at least one compound represented by Formulae 3-1 and 3-2:

<Formula 3-1> $LiNi_xCo_yMn_zO_2$

In Formula 3-1, $0.6 \le x \le 0.95$, $0 < y \le 0.2$, and $0 < z \le 0.1$. For example, $0.7 \le x \le 0.95$, $0 < y \le 0.2$, and $0 < z \le 0.1$.

<Formula 3-2> $LiNi_xCo_yAl_zO_2$

In Formula 3-2, $0.6 \le x \le 0.95$, $0 < y \le 0.2$, and $0 < z \le 0.1$. For example, $0.7 \le x \le 0.95$, $0 < y \le 0.2$, $0 < z \le 0.1$. For example, $0.8 \le x \le 0.95$, $0 < y \le 0.2$, $0 < z \le 0.1$. For example, $0.82 \le x \le 0.95$, $0 < y \le 0.15$, $0 < z \le 0.1$. For example, $0.85 \le x \le 0.95$, $0 < y \le 0.1$, $0 < z \le 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$ or $LiNi_{0.88}Co_{0.1}Al_{0.02}O_2$.

For example, the cathode active material may have a coating layer on the surface of the lithium transition metal oxide, or a mixture of the lithium transition metal oxide and the lithium transition metal oxide having a coating layer may be used.

For example, the coating layer may include a coating element compound of an oxide of a coating element, a hydroxide of a coating element, an oxyhydroxide of a coating element, an oxycarbonate of a coating element, or a

hydroxycarbonate of a coating element.

For example, the compound forming the coating layer may be amorphous or crystalline. The coating elements included in the coating layer may include Mg, Al, Co, K, Na, Ca, Si, Ti, V, Sn, Ge, Ga, B, As, Zr or mixtures thereof. The coating layer formation process may employ any coating method that uses the coating elements on the lithium transition metal oxide and does not adversely affect the physical properties of the cathode active material (e.g., spray coating, dip coating, etc.). As such methods are well understood by those skilled in the art, a detailed description thereof will be omitted.

The conductive material may include carbon black, fine graphite particles, and the like, but is not limited thereto. Any material that may be used as a conductive material in the relevant technical field may be employed.

As the binder, vinylidene fluoride/hexafluoropropylene copolymer, polyvinylidene fluoride (PVDF), polyacrylonitrile, polymethyl methacrylate, polytetrafluoroethylene and mixtures thereof, or styrene butadiene rubber-based polymers may be used, but are not limited thereto, and any binder that may be used in the relevant technical field may be used.

[Separator]

According to an embodiment, the lithium battery may further include a separator (not shown).

Specific examples of the separator may include polyethylene, polypropylene, polyvinylidene fluoride, or a multilayer film having two or more layers thereof, and examples of mixed multilayer films may include a polyethylene/-polypropylene two-layer separator, a polyethylene/polypropylene/polyethylene three-layer separator, and a polypropylene/polyethylene/polypropylene three-layer separator.

According to an embodiment, the battery case containing the lithium battery may be cylindrical, prismatic, or thin-film shaped. For example, the lithium battery may be a large-sized thin-film battery. The lithium battery may be a lithium-ion battery.

According to an embodiment, the lithium battery 100, 200 may be a lithium-air battery, a lithium-sulfur battery, or the like.

According to an embodiment, the lithium battery 100, 200 has excellent lifespan characteristics and high-rate performance and thus may be used in electric vehicles (EVs). For example, it may be used in hybrid vehicles such as plug-in hybrid electric vehicles (PHEVs). It may also be used in fields requiring large-scale power storage. For example, it may be used in electric bicycles, power tools, etc.

In the case where multiple lithium batteries 100, 200 according to an embodiment are stacked, a gel-type electrolyte may be disposed between the cathode and a liquid-impermeable ion-conductive composite membrane. The gel-type electrolyte may include, for example, a PVDF-HFP copolymer, a lithium salt, and a solvent.

Referring to FIG. 3, a lithium battery 1 according to an embodiment includes a cathode 3, the above-described anode 2, and a separator 4. The cathode 3, the anode 2, and the separator 4 are wound or folded to form a battery structure 7. The formed battery structure 7 is accommodated in a battery case 5. An organic electrolyte solution is injected into the battery case 5 and sealed with a cap assembly 6 to complete the lithium battery 1. The battery case 5 is cylindrical, but is not necessarily limited to such a shape, and may be, for example, prismatic or thin-film type.

Referring to FIG. 4, a lithium battery 1 according to an embodiment includes a cathode 3, the above-described anode 2, and a separator 4. The separator 4 is disposed between the cathode 3 and the anode 2, and the cathode 3, the anode 2, and the separator 4 are wound or folded to form a battery structure 7. The formed battery structure 7 is accommodated in a battery case 5. The lithium battery 1 may include an electrode tab 8 which serves as an electrical path for guiding the current formed in the battery structure 7 to the outside. An organic electrolyte is injected into the battery case 5 and sealed to complete the lithium battery 1. The battery case 5 is prismatic, but is not necessarily limited to such a shape, and may be, for example, cylindrical or thin-film type.

Referring to FIG. 5, a lithium battery 1 according to one embodiment includes a cathode 3, the above-described anode 2, and a separator 4. The separator 4 is disposed between the cathode 3 and the anode 2, forming a battery structure 7. The battery structure 7 is stacked in a bi-cell structure and then accommodated in a battery case 5. The lithium battery 1 may include an electrode tab 8, which serves as an electrical path to guide the current generated in the battery structure 7 to the outside.. An organic electrolyte solution is injected into the battery case 5 and sealed to complete the lithium battery 1. The battery case 5 is prismatic, but is not necessarily limited to such a shape, and may be, for example, cylindrical or thin-film type.

A pouch-type lithium battery corresponds to the lithium battery shown in FIGS. 3 to 5, in which a pouch is used as the battery case. The pouch-type lithium battery includes one or more battery structures. A separator is disposed between the cathode and the anode to form the battery structure. The battery structure is stacked in a bi-cell structure, impregnated with an organic electrolyte solution, and then accommodated and sealed in a pouch to complete the pouch-type lithium battery. For example, although not shown in the drawings, the above-described cathode, anode, and separator may be simply stacked and accommodated in a pouch in the form of an electrode assembly, or wound or folded in a jelly-roll form and then accommodated in a pouch. Subsequently, the organic electrolyte solution is injected into the pouch and sealed to complete the lithium battery.

Since lithium batteries have excellent lifespan characteristics and high-rate performance, they are used, for example, in electric vehicles (EVs). For example, they are used in hybrid vehicles such as plug-in hybrid electric vehicles (PHEVs). In addition, they are used in fields requiring large-scale power storage. For example, they are used in electric bicycles, power tools, and the like.

Lithium batteries are stacked in plural to form a battery module, and a plurality of battery modules form a battery pack. Such a battery pack may be used in any device that requires high capacity and high output. For example, it may be used in notebook computers, smartphones, and electric vehicles. The battery module includes, for example, a plurality of batteries and a frame that holds them. The battery pack includes, for example, a plurality of battery modules and a bus bar that connects them. The battery module and/or battery pack may further include a cooling device. A plurality of battery packs are controlled by a battery management system. The battery management system includes a battery pack and a battery control device connected to the battery pack.

Hereinafter, the following examples will be used to explain in more detail, but are not intended to be limited to the following examples.

<u>Evaluation Example 1: Calculation of Interaction Energy Between Lithium Salt and Solvent</u>

The interaction energy between the solvent and lithium ion, and between the solvent and $PF_6^-$, was calculated using the DFT method of the Gaussian, which was structure optimized at the M062X/6-311+G** level for the solvents listed in Table 1. The calculated results are shown in Table 1. In Table 1, $|E_{PF6-s}|$ refers to the absolute value of the interaction energy between the solvent and $PF_6^-$, and $|E_{Li-s}|$ refers to the absolute value of the interaction energy between the solvent and lithium ion.

[Table 1]

| Target Substance | Name | $\|E_{Li-s}\|$(eV) | $E_{PF6-s}\|$(eV) |
|---|---|---|---|
| FEC | Fluoroethylene carbonate | 1.65 | 0.43 |
| DMC | Dimethyl carbonate | 1.7 | 0.16 |
| EC | Ethylene carbonate | 1.86 | 0.36 |
| MFA | Methyl fluoroacetate | 1.89 | 0.03 |
| PC | Propylene carbonate | 1.92 | 0.38 |
| DEC | Diethyl carbonate | 1.92 | 0.12 |
| VEC | Vinyl ethylene carbonate | 1.93 | 0.38 |

In addition, the interaction energy between the lithium ion and the anion contained in the lithium salts listed in Table 2 below was calculated using the DFT method of the Gaussian program, which was structurally optimized at the M062X/6-311+G** level for the lithium salts described in Table 2 below, and is described in Table 1 below. In Table 2 below, $|E_{Li-A}|$ is the absolute value of the interaction energy between the lithium ion and the anion in the lithium salt.

[Table 2]

| Target Substance | Name | $\| E_{Li-A} \|$(eV) |
|---|---|---|
| LiDFOP | Lithium difluoro(bisoxalato)phosphate | 4.87 |
| LiBOB | Lithium bis(oxalato)borate | 5 |
| LiFMDFB | Lithium fluoromalonato(difluoro)borate | 5.12 |
| LiTDI | Lithium 2-trifluoromethyl-4,5-dicyanoimidazole | 5.41 |
| $LiBSO_4F_2$ | Lithium difluoro(sulfato)borate | 5.49 |
| $LiPF_6$ | Lithium hexafluorophosphate | 5.5 |
| LiDFOB | Lithium difluoro(oxalato)borate | 5.54 |
| LiDCTA | Lithium 4,5-dicyano-1,2,3-triazolate | 5.6 |
| LiFSI | Lithium bis(fluorosulfonyl)imide | 5.65 |
| LiTFSI | Lithium bis(trifluoromethanesulfonyl)imide | 5.74 |

(continued)

| Target Substance | Name | $\| E_{Li-A} \|$(eV) |
|---|---|---|
| $LiCF_3SO_3$ | Lithium triflate | 5.8 |
| $LiBF_4$ | Lithium tetrafluoroborate | 5.86 |
| $LiPO_2F_2$ | Lithium Difluorophosphate | 6.08 |
| $LiPOF_4$ | - | 6.21 |

(Preparation of Electrolyte)

Preparation Example 1

An electrolyte was prepared by dissolving 0.6 M $LiBF_4$ and 0.6 M LiDFOB in a liquid mixed solvent composed of FEC:DMC:MFA in a weight ratio of 32:60:8.

Preparation Examples 2 to 6 and Comparative Preparation Examples 1 to 3

Electrolytes were prepared in the same manner as in Preparation Example 1, except that the types of the first lithium salt, second lithium salt, and solvent were changed as shown in Table 3 below.

Evaluation Example 2: Ionic Conductivity

The ionic conductivity of the electrolytes according to Preparation Examples 1 to 6 and Comparative Preparation Examples 1 to 3 was evaluated at 20 °C using a Mettler Toledo conductivity meter.

The results of the ionic conductivity measurements are listed in Table 3 below.

[Table 3]

| | First Lithium Salt | Second Lithium Salt | Solvent | Ionic Conductivity (mS/cm) |
|---|---|---|---|---|
| Preparatio n Example 1 | 0.6M LiDFOB | 0.6M $LiBF_4$ | FEC/DMC/MFA (32wt/60wt/8wt) | 10.1 |
| Preparatio n Example 2 | 0.6M LiDFOB | 0.6M $LiBF_4$ | FEC/DEC/MFA(32wt/ 8wt/60wt) | 6.8 |
| Preparatio n Example 3 | 0.6M LiDFOB | 0.6M $LiBF_4$ | FEC/PC/MFA(32wt/8 wt/60wt) | 7.4 |
| Preparatio n Example 4 | 0.6M LiDFOB | 0.6M $LiBF_4$ | FEC/DMC/MFA(15wt /25wt/60wt) | 9.3 |
| Preparatio n Example 5 | 0.6M LiDFOB | 0.6M $LiBF_4$ | FEC/DMC/MFA(15wt /60wt/25wt) | 10.4 |
| Preparatio n Example 6 | 0.6M LiDFOB | 0.6M $LiBF_4$ | FEC/DMC/MFA (32wt/8wt/60wt) | 7.6 |
| Comparati ve Preparatio n Example 1 | 0.6M LiDFOB | 0.6M $LiBF_4$ | FEC/DMC | 4.1 |
| Comparati ve Preparatio n Example 2 | 0.6M LiDFOB | 0.6M $LiBF_4$ | FEC/DEC(41wt/59wt) | 2.8 |
| Comparati ve Preparatio n Ex-ample 3 | 1.2M $LiPF_6$ | - | FEC/DEC(41wt/59wt) | 6.4 |

Referring to Table 2, it was confirmed that the dissociation degree of the first lithium salt (LiDFOB), which has a

lower interaction energy between the lithium ion and the anion contained in the lithium salt, was greater than that of the second lithium salt ($LiBF_4$), which has a higher interaction energy between the lithium ion and the anion.

Also, referring to Table 3, it was confirmed that when the first lithium salt (LiDFOB) with a high dissociation degree and the second lithium salt ($LiBF_4$)with a low dissociation degree were dissolved in a solvent containing a fluorine-containing linear ester (MFA), the ionic conductivity was improved.

Example 1

(Preparation of Cathode)

$LiNixCoyAl_{1-x-\gamma}O_2$ as a cathode active material, a carbon conductive agent (Denka Black), and polyvinylidene fluoride (PVdF) were mixed at a weight ratio of 97:1.5:1.5 and stirred together with N-methyl-2-pyrrolidone (NMP) in a planetary mixer to prepare a slurry.

The slurry was loaded at 23 $mg/cm^2$ on a 10 μm-thick aluminum current collector, which was bar-coated, dried at room temperature, and then further dried under vacuum at 120 °C, followed by rolling and punching to manufacture a cathode plate having a thickness of 65 μm and an electrode density of 3.7 g/cc.

(Preparation of Anode)

A copper (Cu) current collector having a thickness of 10 μm was used.

(Preparation of Lithium Battery)

Using the cathode plate and the anode manufactured as described above, and employing a PE separator and the electrolyte according to Preparation Example 1, a lithium battery was manufactured through an appropriate pouch or can-sealing process. A certain level of pressure may be applied to the lithium battery.

Examples 2 to 6 and Comparative Examples 1 to 3

Lithium batteries were manufactured in the same manner as in Example 1, except that the electrolyte used was not the one according to Preparation Example 1, but rather the electrolytes according to Preparation Examples 2 to 6 and Comparative Preparation Examples 1 to 3.

Evaluation Example 3: Charge/Discharge Characteristics

For the lithium batteries manufactured according to Examples 1 to 5 and Comparative Examples 1 to 6, at 45 °C, a constant current charge was carried out at a current of 0.1 C rate until the voltage reached 4.30V (vs. Li), followed by a constant voltage mode where 4.30 V was maintained and the cut-off was performed at a current of 0.05 C rate. Subsequently, a constant current discharge was performed at 0.1 C rate (formation process, 1st cycle). This process was carried out once to complete the formation process.

The lithium batteries that had undergone the above formation process were charged to 4.3V (vs. Li) at a current of 0.2 C rate at 45 °C, and then a constant voltage charge mode was applied to maintain 4.3 V while cut-off was performed at a current of 0.05 C rate. Subsequently, constant current discharge was carried out at a rate of 0.5 C. The above-described charge/discharge process was repeated a total of 50 times.

In all of the above charge/discharge cycles, a rest time of 10 minutes was provided after each charge/discharge cycle. Here, the capacity retention rate at the $50^{th}$ cycle is defined by the following Equation.

$$\text{Capacity retention (\%)} = (\text{Discharge capacity at } 50^{th} \text{ cycle/Discharge capacity at } 1^{st} \text{ cycle}) \times 100 \qquad \text{[Equation]}$$

The capacity retention at the $50^{th}$ cycle is shown in Table 4 below.

Evaluation Example 4: Discharge Capacity at 0.5C Compared to Formation Step Discharge Capacity

To compare the cell resistance of the lithium batteries according to Examples 1 to 6 and Comparative Examples 1 to 3, the value of the discharge capacity at 0.5 C relative to the discharge capacity during the 0.1 C formation step was compared at 45 °C.

The results of the 0.5 C/0.1 C discharge capacity ratio are shown in Table 4 below.

[Table 4]

| | Electrolyte | Capacity Retention @50thcycle | Discharge Capacity Ratio |
|---|---|---|---|
| Example 1 | Preparation Example 1 | 86.08 | 93.4 |
| Example 2 | Preparation Example 2 | 88.94 | 95.4 |
| Example 3 | Preparation Example 3 | 87.83 | 95.6 |
| Example 4 | Preparation Example 4 | 88.73 | 96.0 |
| Example 5 | Preparation Example 5 | 93.97 | 96.0 |
| Example 6 | Preparation Example 6 | 89.56 | 95.7 |
| Comparative Example 1 | Comparative Preparation Example 1 | 85.33 | 93.2 |
| Comparative Example 2 | Comparative Preparation Example 2 | 83.51 | 92.7 |
| Comparative Example 3 | Comparative Preparation Example 3 | 76.98 | 93.4 |

According to Table 4, Examples 1 to 6 including the electrolytes of Preparation Examples 1 to 5 exhibited improved rate characteristics and, accordingly, superior cycle life characteristics compared to Comparative Examples 1 to 3.

The above has described an embodiment with reference to the drawings and examples. However, this is merely illustrative, and it will be understood by those skilled in the art that various modifications and equivalent other embodiments may be made therefrom. Accordingly, the scope of protection of the present disclosure shall be defined by the appended claims.

<Description of Reference Numerals>

100, 200: Lithium battery
110, 210: Anode current collector 120, 220: Electrolyte
130, 230: Cathode active material layer 140, 240: Cathode current collector
150, 250: Cathode 225: Metal layer

## Claims

**1.** An electrolyte comprising:

a first lithium salt comprising a lithium ion and a first anion;
a second lithium salt comprising a lithium ion and a second anion; and
a solvent comprising a fluorine-containing linear ester;
wherein a dissociation degree of the first lithium salt with respect to the fluorine-containing linear ester is greater than a dissociation degree of the second lithium salt with respect to the fluorine-containing linear ester.

**2.** The electrolyte of claim 1,

wherein the fluorine-containing linear ester is represented by Formula 1:

<Formula 1>

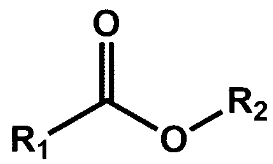

wherein, in Formula 1,
$R_1$ and $R_2$ are each independently: an alkyl group having 1 to 10 carbon atoms, unsubstituted or substituted with -F, -Cl, -Br, or -I; an aryl group having 6 to 20 carbon atoms, unsubstituted or substituted with -F, -Cl, - Br, or -I; or a heteroaryl group having 2 to 20 carbon atoms, unsubstituted or substituted with -F, -Cl, -Br, or -I,
provided that at least one of $R_1$ and $R_2$ is substituted with one or more fluorine (F) atoms.

**3.** The electrolyte of claim 2,
wherein, in Formula 1,
$R_1$ and $R_2$ are each independently an alkyl group having 1 to 10 carbon atoms, unsubstituted or substituted with -F.

**4.** The electrolyte of claim 1,

wherein the fluorine-containing linear ester is represented by Formula 1-1:

<Formula 1-1>

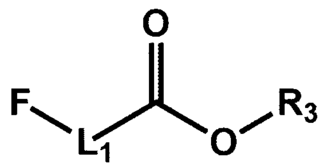

wherein, in Formula 1-1,
$L_1$ is an alkylene group having 1 to 10 carbon atoms, and $R_3$ is an alkyl group having 1 to 10 carbon atoms.

**5.** The electrolyte of claim 1,
wherein a content of the fluorine-containing linear ester is 10 wt% or more based on a total weight of the solvent.

**6.** The electrolyte of claim 1,

wherein the fluorine-containing linear ester satisfies the following Conditions 1 and 2:

<Condition 1>

$$| E_{Li-s} | > 1.8 \text{ eV}$$

wherein, in Condition 1,
$|E_{Li-s}|$ is an absolute value of interaction energy between the fluorine-containing linear ester and lithium ion, measured using the DFT method of the Gaussian program structure-optimized at the M062X/6-311+G** level,

<Condition 2>

$$| E_{PF6-s} | < 0.1 \text{ eV}$$

$|E_{PF6-s}|$ is an absolute value of interaction energy between the fluorine-containing linear ester and $PF_6^-$, measured using the DFT method of the Gaussian program with structure optimization at the M062X/6-311+G** level.

**7.** The electrolyte of claim1,
wherein the solvent further comprises an asymmetric cyclic carbonate, a linear carbonate or a combination thereof.

**8.** The electrolyte of claim 7,

wherein the asymmetric cyclic carbonate is represented by Formula 2:

<Formula 2>

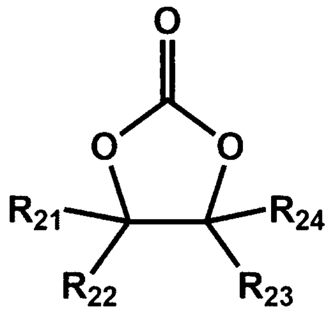

wherein, in Formula 2,
$R_{21}$ to $R_{24}$ are each independently: hydrogen, deuterium (-D), -F, -Cl, -Br or -I; an alkyl group having 1 to 10 carbon atoms unsubstituted or substituted with -F, -Cl, -Br or -I; an aryl group having 6 to 20 carbon atoms unsubstituted or substituted with -F, -Cl, -Br or -I; or a heteroaryl group having 2 to 20 carbon atoms unsubstituted or substituted with -F, -Cl, -Br or -I,
provided that a combination of $R_{21}$ and $R_{22}$ is different from a combination of $R_{23}$ and $R_{24}$.

**9.** The electrolyte of claim 8,
wherein, in Formula 2,
$R_{21}$ to $R_{24}$ are each independently hydrogen or an alkyl group having 1 to 10 carbon atoms.

**10.** The electrolyte of claim 7,
wherein a content of the asymmetric cyclic carbonate is 20 wt% or less based on a total weight of the solvent.

**11.** The electrolyte of claim 1,

wherein the first lithium salt and the second lithium salt satisfy Expression 1:

<Expression 1>

$$|E_{Li\text{-}A1}| < |E_{Li\text{-}A2}|$$

wherein, in Expression 1,
$|E_{Li\text{-}A1}|$ is an absolute value of interaction energy between the first anion and the lithium ion, measured using the DFT method of the Gaussian program with structure optimization at the M062X/6-311+G** level, and $|E_{Li\text{-}A2}|$ is an absolute value of interaction energy between the second anion and the lithium ion, measured using the DFT method of the Gaussian program with structure optimization at the M062X/6-311+G** level.

**12.** The electrolyte of claim 1,

wherein the first lithium salt and the second lithium salt satisfy Expression 2:

<Expression 2>

$$|E_{Li\text{-}A1} - E_{Li\text{-}A2}| > 0.3\ eV$$

wherein, in Expression 2,
$|E_{Li\text{-}A1}|$ is an absolute value of interaction energy between the first anion and the lithium ion, measured using the DFT method of the Gaussian program with structure optimization at the M062X/6-311+G** level, and $|E_{Li\text{-}A2}|$ is an absolute value of interaction energy between the second anion and the lithium ion, measured using the DFT method of the Gaussian program with structure optimization at the M062X/6-311+G** level.

**13.** The electrolyte of claim 1,

wherein the first lithium salt satisfies Expression 3, and the second lithium salt satisfies Expression 4:

<Expression 3>

$$|E_{Li\text{-}A1}| \leq 5.55 \text{ eV}$$

wherein, in Expression 3,
$|E_{Li\text{-}A1}|$ is an absolute value of interaction energy between the first anion and the lithium ion, measured using the DFT method of the Gaussian program with structure optimization at the M062X/6-311+G** level.

<Expression 4>

$$|E_{Li\text{-}A2}| > 5.55 \text{ eV}$$

wherein, in Expression 4,
$|E_{Li\text{-}A2}|$ is an absolute value of interaction energy between the second anion and the lithium ion, measured using the DFT method of the Gaussian program with structure optimization at the M062X/6-311+G** level.

**14.** The electrolyte of claim 1,
wherein the first lithium salt comprises lithium difluoro(bisoxalato)phosphate (LiDFOP), lithium bis(oxalato)borate (LiBOB), lithium fluoromalonato(difluoro)borate (LiFMDFB), lithium 2-trifluoromethyl-4,5-dicyanoimidazole (LiTDI), $LiBSO_4F_2$, $LiPF_6$, lithium difluoro(oxalate)borate (LiDFOB), or any combination thereof.

**15.** The electrolyte of claim 1,
wherein the second lithium salt comprises $LiPOF_4$, $LiPO_2F_2$, $LiBF_4$, $LiCF_3SO_3$, lithium bis(trifluoromethanesulfonyl) imide (LiTFSI), lithium bis(fluorosulfonyl)imide) (LiFSI), lithium 4,5-dicyano-1,2,3-triazolate (LiDCTA), or any combination thereof.

**16.** A lithium battery comprising:

a cathode;
an anode; and
the electrolyte of any one of claims 1 to 15, disposed between the cathode and the anode.

**17.** The lithium battery of claim 16,
wherein the electrolyte is in a liquid or gel form.

**18.** The lithium battery of claim 16,

wherein the cathode comprises: a cathode current collector; and a cathode active material layer, and
the anode comprises only an anode current collector.

**19.** The lithium battery of claim 16,

wherein the cathode comprises: a cathode current collector; and a cathode active material layer,
the anode comprises: an anode current collector; and a metal layer disposed between the anode current collector and the electrolyte, and the metal layer comprises lithium metal or a lithium alloy.

**20.** The lithium battery of claim 16,

further comprising a protective layer disposed between the anode and the electrolyte,
the protective layer being derived from the first lithium salt or the second lithium salt.

**FIG. 1**

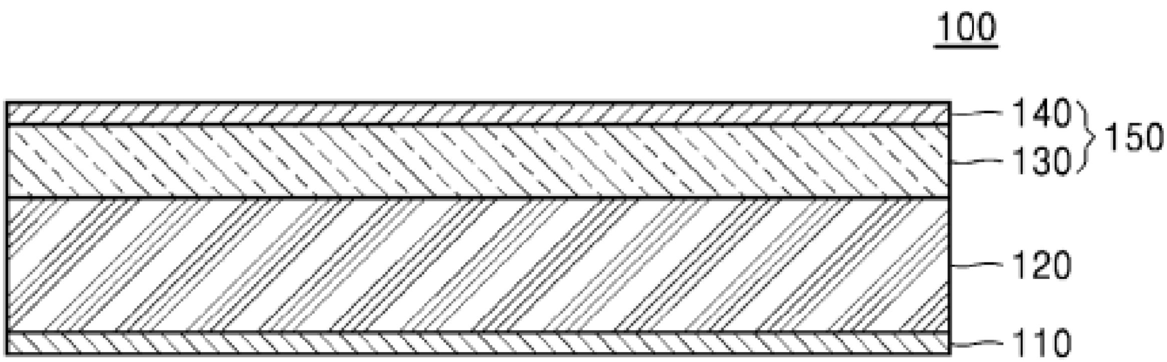

FIG. 2

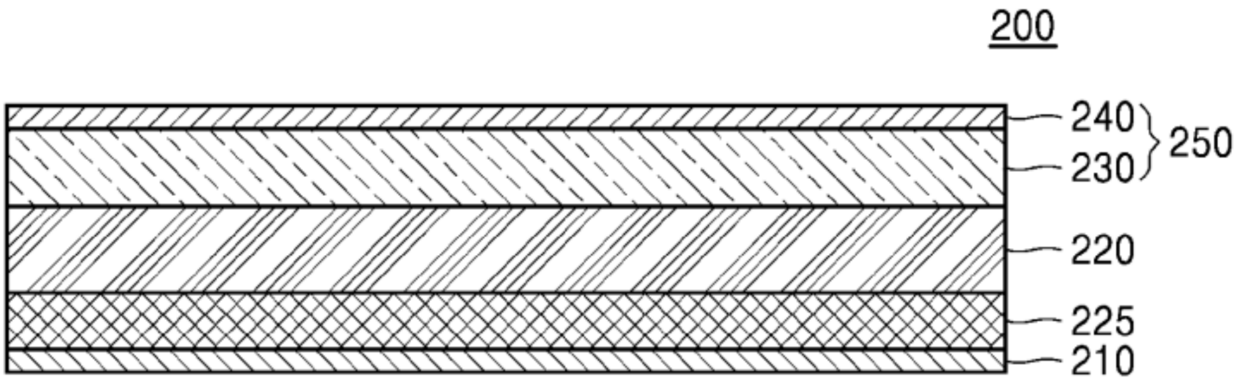

# FIG. 3

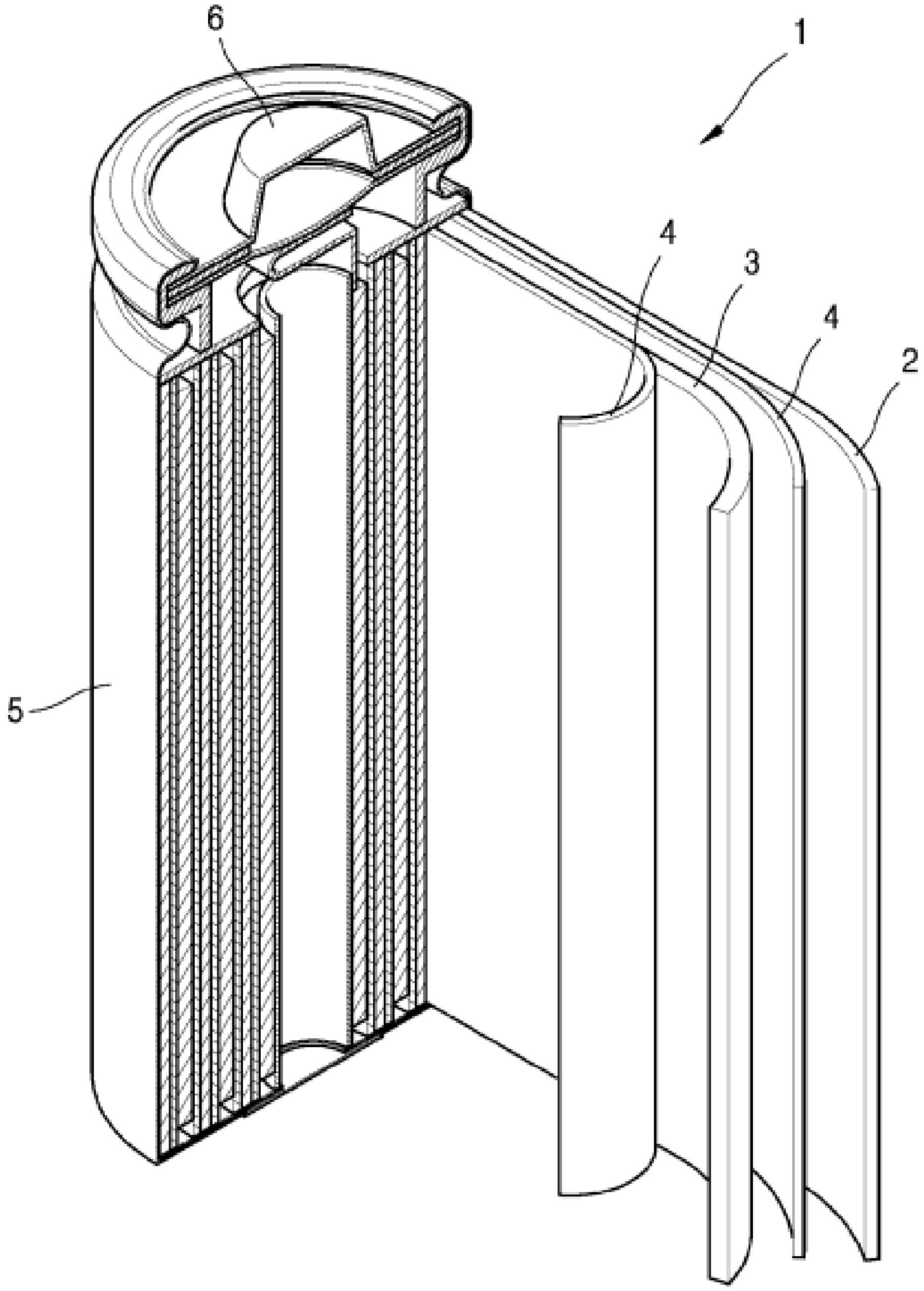

FIG. 4

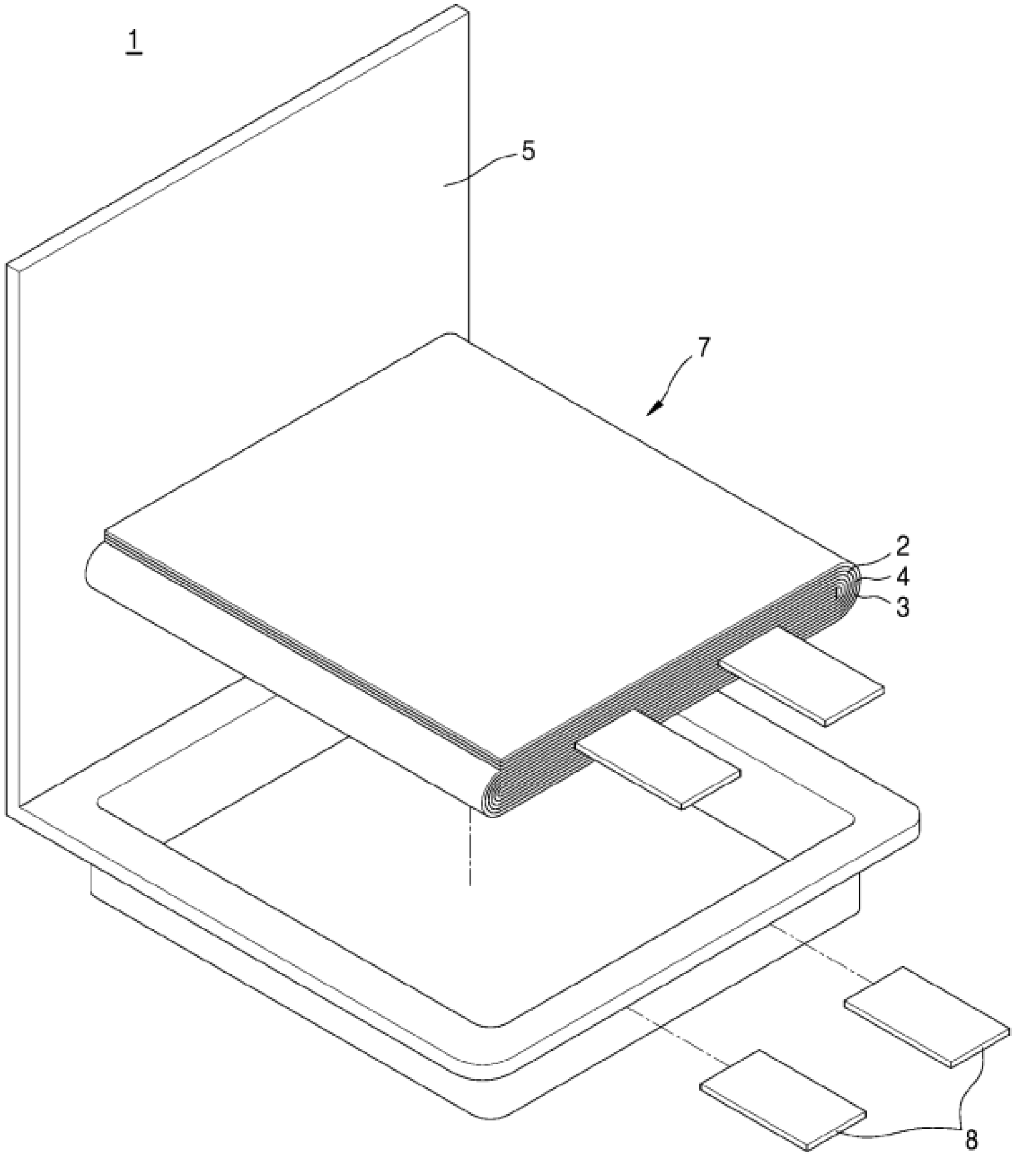

# FIG. 5

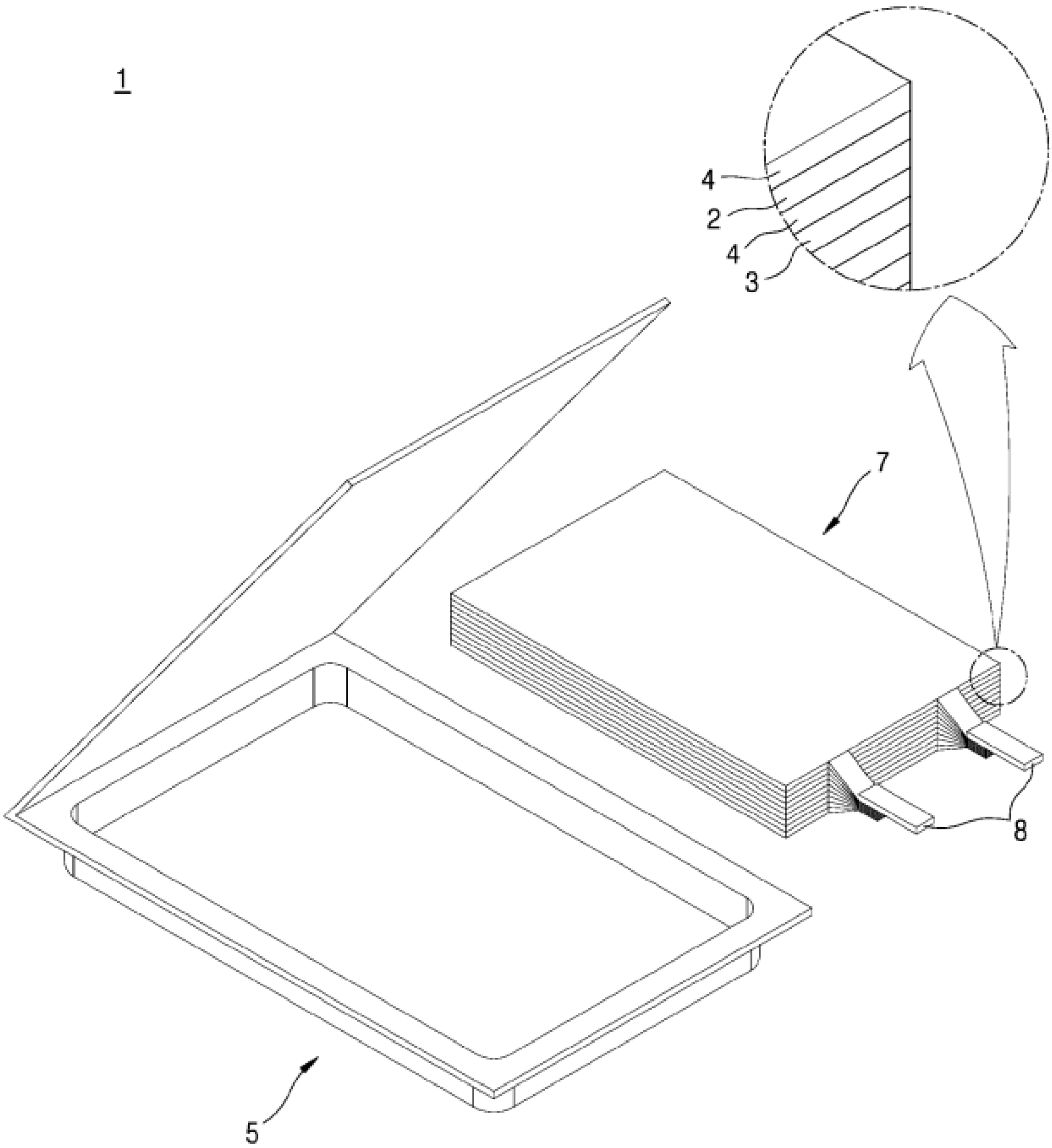

## INTERNATIONAL SEARCH REPORT

International application No.
**PCT/KR2024/003790**

**A. CLASSIFICATION OF SUBJECT MATTER**

**H01M 10/0569**(2010.01)i; **H01M 10/0568**(2010.01)i; **H01M 10/052**(2010.01)i; **H01M 10/058**(2010.01)i; **H01M 10/42**(2006.01)i

According to International Patent Classification (IPC) or to both national classification and IPC

**B. FIELDS SEARCHED**

Minimum documentation searched (classification system followed by classification symbols)

H01M 10/0569(2010.01); H01M 10/052(2010.01); H01M 10/0567(2010.01); H01M 10/0568(2010.01); H01M 50/10(2021.01); H01M 50/20(2021.01); H01M 6/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 전해질(electrolyte), 리튬염(lithium salt), 불소 함유 선형 에스터(fluorine-containing linear ester)

**C. DOCUMENTS CONSIDERED TO BE RELEVANT**

| Category* | Citation of document, with indication, where appropriate, of the relevant passages | Relevant to claim No. |
|---|---|---|
| X | CN 110943251 A (CITIC GUOAN MGL POWER SCIENCE & TECHNOLOGY CO., LTD.) 31 March 2020 (2020-03-31)<br>See claims 1, 4, 7 and 10; paragraphs [0023]-[0025]; example 3; and table 1. | 1-20 |
| A | US 2022-0140394 A1 (GM GLOBAL TECHNOLOGY OPERATIONS LLC) 05 May 2022 (2022-05-05)<br>See entire document. | 1-20 |
| A | KR 10-2015-0048499 A (LG CHEM, LTD.) 07 May 2015 (2015-05-07)<br>See entire document. | 1-20 |
| A | KR 10-2023-0023765 A (CONTEMPORARY AMPEREX TECHNOLOGY CO., LIMITED) 17 February 2023 (2023-02-17)<br>See entire document. | 1-20 |
| A | EP 1498979 B1 (SAMSUNG SDI CO., LTD.) 10 December 2014 (2014-12-10)<br>See entire document. | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 June 2024** | **01 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/003790**

| Patent document cited in search report | Publication date (day/month/year) | Patent family member(s) | Publication date (day/month/year) |
|---|---|---|---|
| CN 110943251 A | 31 March 2020 | None | |
| US 2022-0140394 A1 | 05 May 2022 | CN 114447437 A | 06 May 2022 |
| | | DE 102021113933 A1 | 05 May 2022 |
| | | US 11688882 B2 | 27 June 2023 |
| KR 10-2015-0048499 A | 07 May 2015 | None | |
| KR 10-2023-0023765 A | 17 February 2023 | CN 116349050 A | 27 June 2023 |
| | | EP 4160773 A1 | 05 April 2023 |
| | | EP 4160773 A4 | 08 November 2023 |
| | | JP 2023-538722 A | 11 September 2023 |
| | | US 2023-0318042 A1 | 05 October 2023 |
| | | WO 2023-004821 A1 | 02 February 2023 |
| EP 1498979 B1 | 10 December 2014 | CN 100459273 C | 04 February 2009 |
| | | CN 1577944 A | 09 February 2005 |
| | | EP 1498979 A1 | 19 January 2005 |
| | | JP 2005-038722 A | 10 February 2005 |
| | | JP 4671589 B2 | 20 April 2011 |
| | | KR 10-0589321 B1 | 14 June 2006 |
| | | KR 10-2005-0008446 A | 21 January 2005 |
| | | US 2005-0014072 A1 | 20 January 2005 |
| | | US 7491471 B2 | 17 February 2009 |

Form PCT/ISA/210 (patent family annex) (July 2022)